# EUROPEAN PATENT APPLICATION

(11) **EP 3 270 623 A1**
(43) Date of publication of application: **17.01.2018**
(21) Application number: 16776715.1
(22) Date of filing: 08.04.2016
(51) Int. Cl.: H04W 24/10, H04W 72/04

(54) **NETWORK DEVICE, USER TERMINAL, AND BASE STATION**

(30) Priority: 10.04.2015 US 201562145908 P
(71) Applicant: Kyocera Corporation, Kyoto-shi, Kyoto 612-8501 (JP)
(72) Inventor: FUJISHIRO, Masato, Kyoto-shi Kyoto 612-8501 (JP); CHANG, Henry, San Diego, California 92123 (US)
(74) Representative: Schwabe - Sandmair - Marx
(86) International application number: PCT/JP2016/061620
(87) International publication number: WO 2016/163549

(57) **Abstract**

A base station according to one embodiment includes a controller that acquires, from a MCE, a QCI associated with an MBMS bearer between an MBMS gateway and the base station. The controller provides a multicast service over SC-PTM transmission, on the basis of the QCI.

## Description

### TECHNICAL FIELD

The present invention relates to a network apparatus, a user terminal, and a base station in a mobile communication system.

### BACKGROUND ART

In the Third Generation Partnership Project (3GPP) that is a mobile communication system standardization project, the Multimedia Broadcast Multicast Service (MBMS) is specified to provide a broadcast/multicast service.

In the current MBMS, broadcast/multicast data is transmitted via a Physical Multicast Channel (PMCH) for each Multicast-Broadcast Single-Frequency Network (MBSFN) area including a plurality of cells (MBSFN transmission).

Meanwhile, Single Cell Point to Multi-point (SC-PTM) transmission has been studied to provide an efficient multicast service. In the SC-PTM transmission, multicast data is transmitted via a Physical Downlink Shared Channel (PDSCH), for each cell.

### CITATION LIST

### NON PATENT LITERATURE

Non patent Literature 1: 3GPP Contribution "RP-142205"

### SUMMARY

A base station according to one embodiment comprises a controller configured to acquire a QCI associated with a MBMS bearer between an MBMS gateway and the base station, from a MCE. The controller is configured to provide a multicast service over SC-PTM transmission on the basis of the QCI.

A network apparatus according to one embodiment is provided in a network that provides a multicast service over a SC-PTM transmission. The network apparatus comprises a controller configured to determine, on the basis of a setting status of information notified from a user terminal in a cell or a MBMS in the network, whether or not the SC-PTM transmission is performed in the cell.

A user terminal according to one embodiment is a user terminal to which a multicast service is provided from a network over SC-PTM transmission. The user terminal comprises a controller configured to transmit a measurement report to the network, in a case where the SC-PTM transmission is started. The measurement report includes information indicating whether or not a modulation and coding scheme applied to the SC-PTM transmission is sufficient.

A user terminal according to one embodiment is a user terminal to which a multicast service is provided from a network over SC-PTM transmission. The user terminal comprises a controller configured to transmit an MBMS counting response to the network, in response to a MBMS counting request from the network. The MBMS counting response includes information indicating a geographical location of the user terminal or information related to a neighboring cell detected by the user terminal.

A base station according to one embodiment provides a multicast service over SC-PTM transmission. The base station comprises a controller configured to transmit data to a user terminal having a first bearer for unicast transmission and a second bearer for SC-PTM transmission. The controller is configured to switch between the unicast transmission and the SC-PTM transmission by routing data received from a core network to any one of the first bearer and the second bearer.

### BRIEF DESCRIPTION OF DRAWINGS

Fig. 1 is a diagram illustrating a configuration of an LTE system.
Fig. 2 is a diagram illustrating a network configuration according to a MBMS/eMBMS.
Fig. 3 is a protocol stack diagram of a radio interface in the LTE system.
Fig. 4 is a diagram illustrating a downlink channel configuration in the LTE system.
Fig. 5 is a configuration diagram of a radio frame used in the LTE system.
Fig. 6 is a block diagram of a UE 100 (user terminal) according to embodiments.
Fig. 7 is a block diagram of an eNB 200 (base station) according to the embodiments.
Fig. 8 is a diagram for describing an overview of SC-PTM transmission according to the embodiments.
Fig. 9 is a sequence diagram illustrating an operation pattern 1 of a first embodiment.
Fig. 10 is a sequence diagram illustrating an operation pattern 2 of the first embodiment.
Fig. 11 is a flowchart illustrating an operation pattern 3 of the first embodiment.
Fig. 12 is a sequence diagram illustrating an operation pattern 5 of the first embodiment.
Fig. 13 is a diagram for describing an operation pattern 1 of a second embodiment.
Fig. 14 is a diagram for describing an operation pattern 2 of the second embodiment.

### DESCRIPTION OF EMBODIMENTS

### [Summary of Embodiments]

In a case where SC-PTM transmission is introduced, as an option of a transmission scheme of downlink data (user data), the SC-PTM transmission is added to unicast transmission and MBSFN transmission. However, in a case where the SC-PTM transmission is introduced, it is not clear how to decide or switch whether the SC-PTM transmission is performed or not.

In the following embodiments, a network apparatus, a user terminal, and a base station are disclosed capable of appropriately performing decision or switching related to the SC-PTM transmission.

A network apparatus according to a first embodiment is provided in a network that provides a multicast service over a SC-PTM transmission. The network apparatus comprises a controller configured to determine, on the basis of a setting status of information notified from a user terminal in a cell or a MBMS in the network, whether or not the SC-PTM transmission is performed in the cell.

A user terminal according to the first embodiment is a user terminal to which a multicast service is provided from a network over SC-PTM transmission. The user terminal comprises a controller configured to transmit a measurement report to the network, in a case where the SC-PTM transmission is started. The measurement report includes information indicating whether or not a modulation and coding scheme applied to the SC-PTM transmission is sufficient.

A user terminal according to a first embodiment is a user terminal to which a multicast service is provided from a network over SC-PTM transmission. The user terminal comprises a controller configured to transmit an MBMS counting response to the network, in response to a MBMS counting request from the network. The MBMS counting response includes information indicating a geographical location of the user terminal or information related to a neighboring cell detected by the user terminal.

A base station according to a second embodiment provides a multicast service over SC-PTM transmission. The base station comprises a controller configured to transmit data to a user terminal having a first bearer for unicast transmission and a second bearer for SC-PTM transmission. The controller is configured to switch between the unicast transmission and the SC-PTM transmission by routing data received from a core network to any one of the first bearer and the second bearer.

### [Overview of mobile communication system]

Hereinafter, an overview of an LTE system which is the mobile communication system according to the embodiments will be described below.

### (System Configuration)

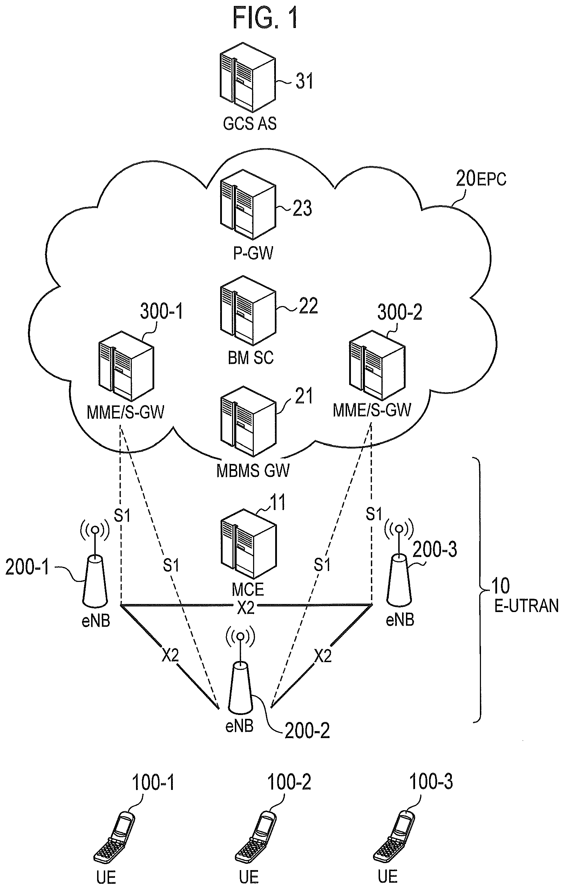

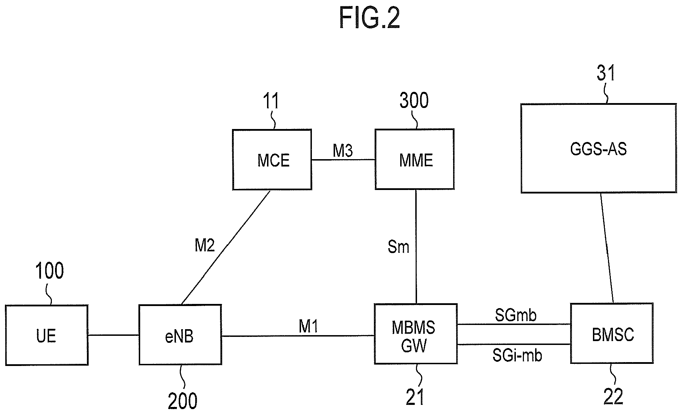

FIG. 1 is a diagram illustrating a configuration of the LTE system according to the embodiments. FIG. 2 is a diagram illustrating a configuration of a network according to MBMS/eMBMS according to the embodiments.

As illustrated in Fig. 1, the LTE system includes a plurality of UEs (User Equipments) 100, E-UTRAN (Evolved-UMTS Terrestrial Radio Access Network) 10, and EPC (Evolved Packet Core) 20.

The UE 100 corresponds to a user terminal. The UE 100 is a mobile communication device and performs radio communication with a cell (a serving cell). Configuration of the UE 100 will be described later.

The E-UTRAN 10 corresponds to a radio access network. The E-UTRAN 10 includes a plurality of eNBs (evolved Node-Bs) 200. The eNB 200 corresponds to a base station. The eNBs200 are connected mutually via an X2 interface. Configuration of the eNB200 will be described later.

The eNB 200 manages one or a plurality of cells and performs radio communication with the UE 100 which establishes a connection with the cell of the eNB 200. The eNB 200 has a radio resource management (RRM) function, a routing function for user data (hereinafter simply referred as "data"), and a measurement control function for mobility control and scheduling, and the like. It is noted that the "cell" is used as a term indicating a minimum unit of a radio communication area, and is also used as a term indicating a function of performing radio communication with the UE 100.

The EPC 20 corresponds to a core network. The EPC 20 includes a plurality of MME (Mobility Management Entity)/S-GWs (Serving-Gateways) 300. The MME performs various mobility controls and the like for the UE 100. The S-GW performs control to transfer data. MME/S-GW 300 is connected to eNB 200 via an S1 interface. The E-UTRAN 10 and the EPC 20 constitute a network of the LTE system.

Moreover, the E-UTRAN 10 includes an MCE (Multi-Cell/Multicast Coordinating Entity) 11. The MCE 11 is connected to the eNB 200 via a M2 interface and is connected to the MME 300 via a M3 interface (See Fig. 2). The MCE 11 performs MBSFN radio resource management/allocation and the like.

The EPC 20 includes an MBMS GW (Multimedia Broadcast Multicast Service Gateway) 21. The MBMS GW 21 is connected to the eNB 200 via a M1 interface, connected to the MME 300 via a Sm interface, and connected to a BM-SC 22 via a SG-mb interface and a SGi-mb interface (See Fig. 2). The MBMS GW 21 performs IP multicast data transmission and session control to the eNB 200.

The EPC 20 also includes a BM-SC (Broadcast Multicast Service Center) 22. The BM-SC 22 is connected to the MBMS GW 21 via the SG-mb and SGi-mb interfaces, and is connected to the P-GW 23 via the SGi interface (See Fig. 2). The BM-SC 22 mainly manages and allocates TMGI (Temporary Mobile Group Identity).

Further, a GCS AS (Group Communication Service Application Server) 31 is provided in a network (i.e., the Internet) outside the EPC 20. The GCS AS 31 is an application server for group communication. The GCS AS is connected to a BM-SC 22 via a MB2-U interface and a MB2-C interface, and is connected to a P-GW 23 via a SGi interface. The GCS AS 31 performs group management and data distribution (including determination of whether to use MBMS or whether to use unicast) in group communication and the like.

### (Configuration of raido protocol)

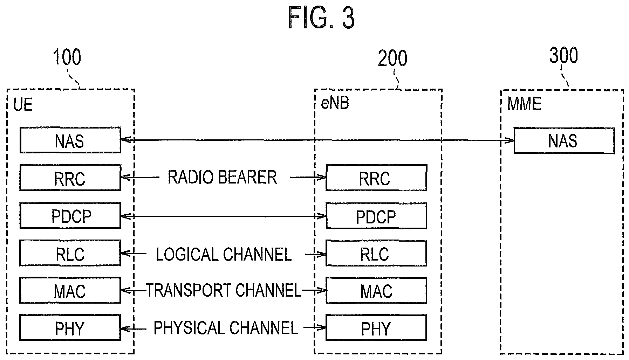

Fig. 3 is a protocol stack diagram of a radio interface in the LTE system.

As illustrated in Fig. 3, the radio interface protocol is classified into a layer 1 to a layer 3 of an OSI reference model, wherein the layer 1 is a physical (PHY) layer. The layer 2 includes a MAC (Medium Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, data and control signal are transmitted via the physical channel.

The MAC layer performs priority control of data, a retransmission process by hybrid ARQ (HARQ), and a random access procedure and the like. Between the MAC layer of the UE 100 and the MAC layer of the eNB 200, data and control signal are transmitted via a transport channel. The MAC layer of the eNB 200 includes a scheduler that determines a transport format of an uplink and a downlink (a transport block size and a modulation and coding scheme (MCS)) and a resource block to be assigned to the UE 100.

The RLC layer transmits data to an RLC layer of a reception side by using the functions of the MAC layer and the PHY layer. Between the RLC layer of the UE 100 and the RLC layer of the eNB 200, data and control signal are transmitted via a logical channel.

The PDCP layer performs header compression and decompression, and encryption and decryption.

The RRC layer is defined only in a control plane dealing with control signal. Between the RRC layer of the UE 100 and the RRC layer of the eNB 200, message (RRC messages) for various types of configuration are transmitted. The RRC layer controls the logical channel, the transport channel, and the physical channel in response to establishment, re-establishment, and release of a radio bearer. When there is a connection (RRC connection) between the RRC of the UE 100 and the RRC of the eNB 200, the UE 100 is in an RRC connected mode, otherwise the UE 100 is in an RRC idle mode.

ANAS (Non-Access Stratum) layer positioned above the RRC layer performs a session management, a mobility management and the like.

### (Downlink Channel Configuration)

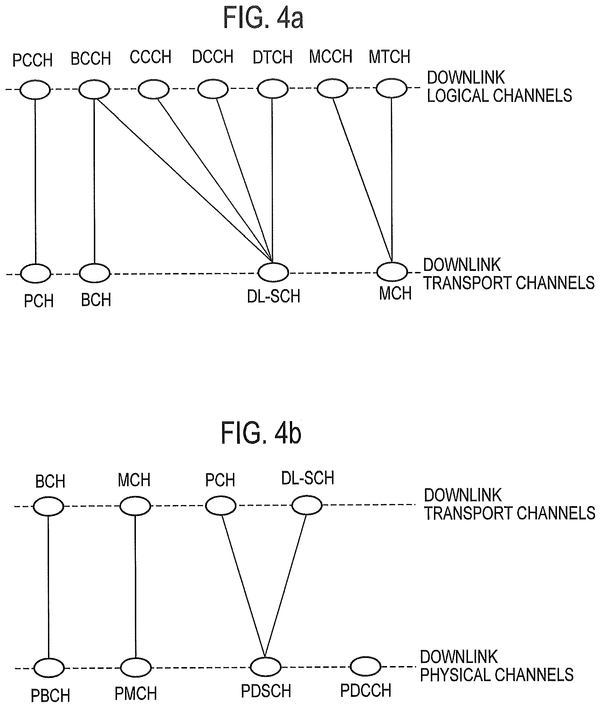

Fig. 4 is a diagram illustrating a downlink channel configuration in the LTE system.

Fig. 4(a) illustrates mapping between logical channels (Downlink Logical Channels) and transport channels (Downlink Transport Channels).

As illustrated in Fig. 4(a), Paging Control Channel (PCCH) is a logical channel for transferring paging information and system information change notifications. The PCCH is mapped to a Paging Channel (PCH) that is a transport channel.

A Broadcast Control Channel (BCCH) is a logical channel for broadcast system information. The BCCH is mapped to a Downlink Shared Channel (DL-SCH) or a Broadcast Control Channel (BCH) that is a transport channel.

A Common Control Channel (CCCH) is a logical channel for transmission control information between the UE 100 and the eNB 200. The CCCH is used in a case where the UE 100 does not have the RRC connection with the network. The CCCH is mapped to the DL-SCH.

A Dedicated Control Channel (DCCH) is a logical channel for transmitting an individual piece of control information between the UE 100 and the network. The DCCH is used in a case where the UE 100 has the RRC connection. The DCCH is mapped to the DL-SCH.

A Dedicated Traffic Channel (DTCH) is an individual logical channel for transmitting the data. The DTCH is mapped to the DL-SCH.

A Multicast Control Channel (MCCH) is a logical channel for one-to-many (broadcast/multicast) transmission. The MCCH is used for transmitting MBMS control information for a Multicast Traffic Channel (MTCH) from the network to the UE 100. The MCCH is mapped to a Multicast Channel (MCH) that is a transport channel.

The MTCH is a logical channel for one-to-many (broadcast/multicast) data transmission from the network to the UE 100. The MTCH is mapped to the MCH.

Fig. 4(b) illustrates mapping between transport channels (Downlink Transport Channels) and physical channels (Downlink Physical Channels).

As illustrated in Fig. 4(b), the BCH is mapped to a Physical Broadcast channel (PBCH).

The MCH is mapped to a Physical Multicast Channel (PMCH). The MCH supports the MBSFN transmission over a plurality of cells.

The PCH and the DL-SCH are mapped to a Physical Downlink Shared Channel (PDSCH). The DL-SCH supports the HARQ, link adaptation, and dynamic resource allocation.

A Physical Downlink Control Channel (PDCCH) carries resource allocation information related to the PDSCH (DL-SCH, PCH), HARQ information related to the DL-SCH, and the like. Also, the PDCCH carries an uplink scheduling grant.

### (Configuration of radio frame)

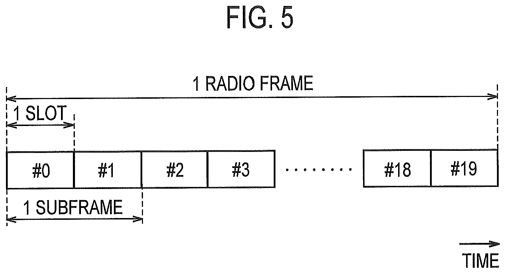

FIG.5 is a configuration diagram of a radio frame used in the LTE system. In the LTE system, OFDMA (Orthogonal Frequency Division Multiplexing Access) is applied to a downlink, and SC-FDMA (Single Carrier Frequency Division Multiple Access) is applied to an uplink, respectively.

As illustrated in FIG. 5, a radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction (not shown), and a plurality of symbols in the time direction. Each resource block includes a plurality of subcarriers in the frequency direction. One symbol and one subcarrier forms one resource element. Of the radio resources (time and frequency resources) assigned to the UE 100, a frequency resource can be identified by a resource block and a time resource can be identified by a subframe (or a slot).

In the downlink, a section of several symbols at the head of each subframe is a control region used as a PDCCH for mainly transmitting a control signal. Furthermore, the other portion of each subframe is a region available as a PDSCH for mainly transmitting downlink data. Furthermore, in each subframe, a downlink reference signal such as a cell specific reference signal (CRS) is arranged.

In the uplink, both ends in the frequency direction of each subframe are control regions used as a physical uplink control channel (PUCCH) for mainly transmitting an uplink control signal. Furthermore, the other portion of each subframe is a region available as a physical uplink shared channel (PUSCH) for mainly transmitting uplink data. Further, in the downlink, an MBSFN subframe, which is a subframe for MBSFN transmission, may be configured.

### (Configuration of user terminal)

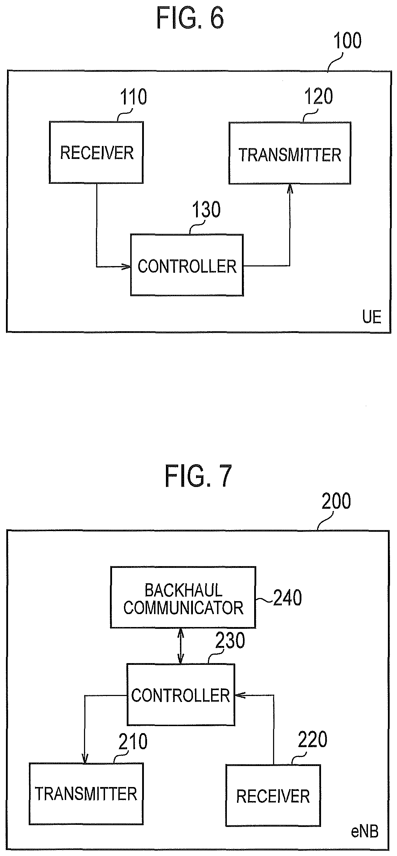

FIG. 6 is a block diagram of the UE 100 (user terminal) according to the embodiments.

As illustrated in FIG. 6, the UE 100 includes a receiver 110, a transmitter 120, and a controller 130.

The receiver 110 performs various types of reception under the control of the controller 130. The receiver 110 includes an antenna and a receiving machine. The receiving machine converts a radio signal received by the antenna into a baseband signal (reception signal) and outputs it to the controller 130.

The transmitter 120 performs various types of transmission under the control of the controller 130. The transmitter 120 includes an antenna and a transmitting machine. The transmitting machine converts a baseband signal (transmission signal) output from the controller 130 into a radio signal and transmits it from the antenna.

The controller 130 performs various controls in the UE 100. The controller 130 includes a processor and a memory. The memory stores programs executed by the processor and information used for processing by the processor. The processor includes a baseband processor that performs modulation and demodulation of the baseband signal, performs encoding and decoding, and the like, and a CPU (Central Processing Unit) that executes various programs by executing a program stored in the memory. The processor may include a codec for encoding / decoding audio / video signals. The processor executes various processes described later and various communication protocols described above.

### (Configuration of base station)

FIG. 7 is a block diagram of the eNB 200 (base station) according to the embodiments.

As illustrated in FIG. 5, the eNB 200 includes a transmitter 210, a receiver 220, a controller 230, and a backhaul communication unit 240.

The transmitter 210 performs various transmissions under the control of the controller 230. The transmitter 210 includes an antenna and a transmitting machine. The transmitting machine converts a baseband signal (transmission signal) output from the controller 230 into a radio signal and transmits it from the antenna.

The receiver 220 performs various types of reception under the control of the controller 230. The receiver 220 includes an antenna and a receiving machine. The receiving machine converts a radio signal received by the antenna into a baseband signal (reception signal) and outputs it to the controller 230.

The controller 230 performs various controls in the eNB 200. The controller 230 includes a processor and a memory. The memory stores programs executed by the processor and information used for processing by the processor. The processor includes a baseband processor that performs modulation and demodulation of the baseband signal, performs encoding and decoding, and the like, and a CPU (Central Processing Unit) that executes various programs by executing a program stored in the memory. The processor executes various processes described later and various communication protocols described above.

The backhaul communication unit 240 is connected to the neighboring eNB via the X2 interface, and is connected to the MME/S-GW 300 via the S1 interface. The backhaul communication unit 240 is used for communication performed on the X2 interface, communication performed on the S1 interface, and the like.

### (Overview of SC-PTM Transmission)

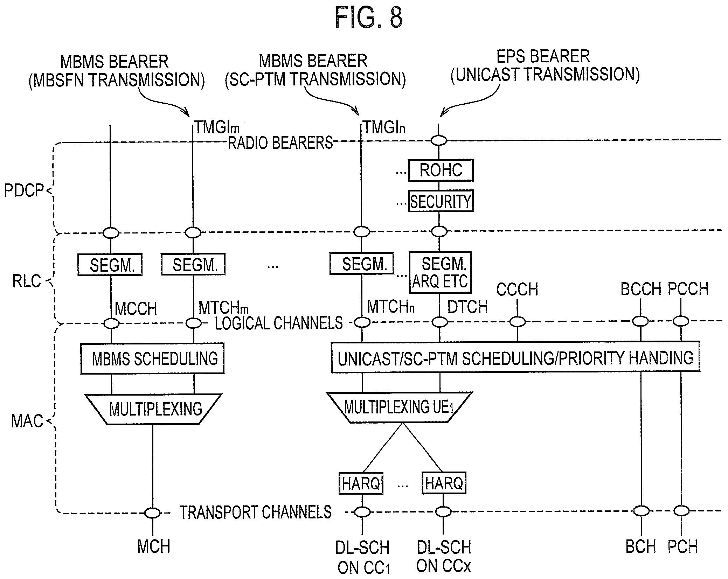

Fig. 8 is a diagram for describing an over view of the SC-PTM transmission according to a first embodiment. Here, processing in the eNB 200 will be mainly described. The eNB 200 according to the first embodiment provides a multicast service over the SC-PTM transmission.

As illustrated in Fig. 8, an MBMS bearer to which the SC-PTM transmission is applied is associated with a Temporary Mobile Group Identity (TMGI) indicating the multicast service (MBMS service). Here, the MBMS bearer is a bearer for broadcast/multicast established between the UE 100 and the BM-SC 22. For example, for a certain MBMS service, an IP multicast bearer is established between the eNB 200 and the MBMS GW 21, and an MBMS PTM radio bearer is established between the eNB 200 and the UE 100.

The MBMS bearer to which the SC-PTM transmission is applied is subjected to segmentation in the RLC layer, and then is mapped to the MTCH that is a logical channel. Incidentally, for the SC-PTM transmission, an Unacknowledged Mode (UM) is applied in the RLC layer, and ARQ processing does not have to be applied. The MTCH exists for each TMGI. That is, the TMGI is associated with an LCID that is an identifier of a logical channel.

An Evolved Packet System (EPS) bearer to which the unicast transmission is applied is subjected to ROHC processing and Security processing in the PDCP layer, and is subjected to segmentation and ARQ processing in the RLC layer, and then is mapped to the DTCH that is a logical channel. Here, the EPS bearer is a bearer for unicast, which is established between the UE 100 and the P-GW 23.

The controller 230 (MAC layer) of the eNB 200 performs unicast/SC-PTM scheduling and priority control (Priority Handling) for each logical channel of the MTCH, DTCH, CCCH, BCCH, and PCCH. Also, the controller 230 (MAC layer) of the eNB 200 multiplexes the MTCH and the DTCH (Multiplexing), and applies HARQ processing, and then performs mapping to the DL-SCH of each component carrier (CC).

Further, the eNB 200 may apply a MBMS bearer to MBSFN transmission and provide a broadcast/multicast service over the MBSFN transmission. The controller 230 (MAC layer) of the eNB 200, for the MCCH and the MTCH, performs MBMS scheduling with reference to MBMS scheduling information received from the MCE 11, and then performs multiplexing (Multiplexing), and mapping to the MCH.

### [First Embodiment]

Hereinafter, a first embodiment will be described.

A network apparatus according to the first embodiment is provided in a network providing multicast service over SC-PTM transmission. Hereinafter, a case will be mainly assumed where a network apparatus is an eNB 200. However, the network apparatus may be a MCE 11, or the like. The network apparatus, on the basis of information notified from a UE 100 in a cell or a setting status of a MBMS in the network, performs control (SC-PTM control) including determination whether or not to perform the SC-PTM transmission in the cell.

### (Operation pattern 1)

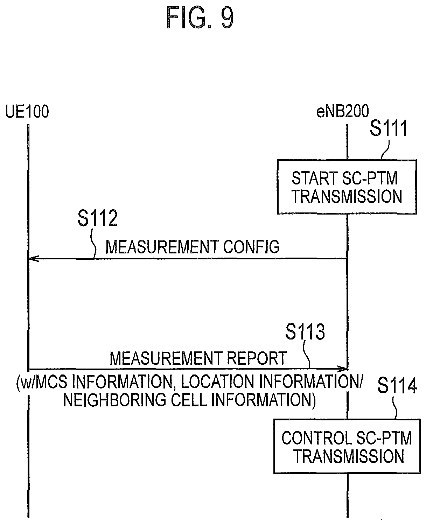

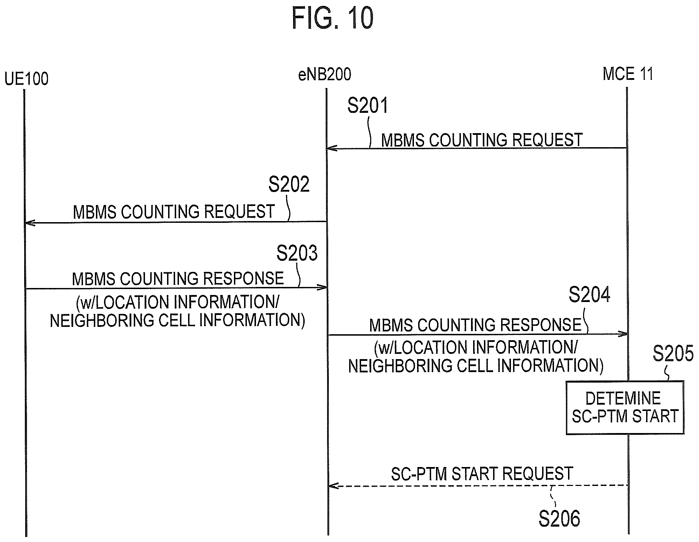

Fig. 9 is a sequence diagram illustrating an operation pattern 1 of the first embodiment. Incidentally, in Figs. 9 and 10, only one UE 100 is illustrated belonging to a multicast group; however, a plurality of UEs 100 actually belongs to the multicast group. For the UE 100 belonging to the multicast group, a Group-Radio Network Temporary Identity (G-RNTI) is assigned from the eNB 200, for example.

As illustrated in Fig. 9, in step S111, the eNB 200 starts the SC-PTM transmission in the cell of the eNB 200. Specifically, the eNB 200 transmits multicast data to the UE 100 belonging to the multicast group over the SC-PTM transmission. For transmission of the multicast data, the G-RNTI is applied. The UE 100 receiving the multicast data over the SC-PTM transmission may be in an RRC connected state, or may be in an RRC idle state, in the cell of the eNB 200. Hereinafter, a case will be mainly assumed where the UE 100 receiving the SC-PTM transmission is in the RRC connected state.

In step S112, the eNB 200 transmits a measurement setting (Measurement Config) to the UE 100 by an individual RRC message. However, step S112 may be performed before step Sill.

The "Measurement Config" may include report setting information (ReportConfig), a measurement object (MeasObject), and a measurement identifier (MeasId). The "ReportConfig" sets a condition for transmitting "Measurement Report" from the UE 100 to the eNB 200. For example, according to a condition defined by Event-A3, in a case where a measurement result for a peripheral cell is better than a measurement result for a current serving cell by an offset value or more, the "Measurement Report" is transmitted. Also, according to a condition defined by "Periodical", by the "Measurement Report", the "Measurement Report" is transmitted at a predetermined report period. The offset value, a predetermined threshold, the predetermined report period, the number of times of report, a type of a report condition, and the like are set with the "ReportConfig". The "MeasObject" sets a Radio Access Technology (RAT) and/or a frequency that should be measured by the UE 100. The "MeasId" is used for associating one "ReportConfig" and one "MeasObject" with each other. The UE 100 performs measurement for the measurement object specified by the "MeasObject" corresponding to the "MeasId", and transmits the "Measurement Report" to the eNB 200, in a case where the condition specified by the "ReportConfig" corresponding to the "MeasObject" is satisfied by the "MeasId".

The "Measurement Config" may include identification information indicating an MBMS service (multicast service) to be a target of MCS information described later. The identification information is the G-RNTI corresponding to the MBMS service (multicast group). Alternatively, the identification information may be a Temporary Mobile Group Identity (TMGI) corresponding to the MBMS service.

The "Measurement Config" may include information for requesting to include the MCS information described later in the "Measurement Report". The "Measurement Config" may include information for requesting to include neighboring cell information and/or location information described later, in the "Measurement Report". The "Measurement Config" may include information for setting a report condition based on a reception state of the SC-PTM transmission. For example, a report condition may be set at which the "Measurement Report" is transmitted in a case where a received quality (for example, error rate) of the SC-PTM transmission is lower than a predetermined threshold.

The UE 100 performs measurement for a downlink reference signal (Cell-specific Reference Signal (CRS)) for each cell, and obtains a measurement result. The measurement result is a reference signal received power (RSRP) and/or a reference signal received quality (RSRQ), or the like. Also, the UE 100 measures the received quality of the SC-PTM transmission, and determines whether or not the SC-PTM transmission applied to a modulation and coding scheme (MCS) is sufficient.

In step S113, the UE 100 transmits the "Measurement Report" that is a kind of RRC message to the eNB 200, on the basis of the "Measurement Config". The eNB 200 receives the "Measurement Report".

The "Measurement Report" includes not only cell measurement results (RSRP/RSRQ), but also information (MCS information) indicating whether or not the MCS applied to the SC-PTM transmission is sufficient. The MCS information is a 1-bit information (for example, OK/NG) indicating whether or not the MCS applied to the SC-PTM transmission is sufficient. Alternatively, the MCS information is information for requesting increase or decrease (UP/DOWN) of the MCS. Alternatively, the MCS information is an index value indicating the MCS expected by the UE 100.

The "Measurement Report" may include information indicating a geographical location of the UE 100 (location information) and/or information related to a neighboring cell detected by the UE 100 (neighboring cell information). The location information is Global Navigation Satellite System (GNSS) location information, for example. The neighboring cell information includes a neighboring cell measurement result. The neighboring cell measurement result includes a cell ID of the neighboring cell. The neighboring cell information may include information indicating whether or not the neighboring cell provides an MBMS service (of which the UE 100 has an interest).

In step S114, the eNB 200 controls the SC-PTM transmission on the basis of the information included in the "Measurement Report".

For example, the eNB 200 may increase or decrease the MCS applied to the SC-PTM transmission, on the basis of the MCS information obtained from each UE 100 belonging to the multicast group. Also, in a case where the UE 100 exists that cannot satisfy a required received quality even by increase or decrease of the MCS, the eNB may determine to switch from the SC-PTM transmission to the unicast transmission, for the UE 100. Alternatively, in a case where a predetermined ratio or more of the UEs 100 exist that cannot satisfy the required received quality even by increase or decrease of the MCS, the eNB 200 may determine to stop the SC-PTM transmission for the multicast group, and switch to the unicast transmission. Alternatively, the eNB 200 may determine to switch from the SC-PTM transmission to the MBSFN transmission and notify the MCE 11 of that effect.

The eNB 200 may determine to switch from the SC-PTM transmission to the MBSFN transmission, on the basis of the location information/neighboring cell information obtained from each UE 100 belonging to the multicast group. For example, in a case where the multicast group is located near the cell edge of the cell of the eNB 200, to avoid interference with the neighboring cell, the eNB 200 may determine to switch to the MBSFN transmission over an MBSFN area including the cell of the eNB 200 and the neighboring cell.

The eNB 200 may perform grouping of the UE 100 on the basis of the information included in the "Measurement Report". For example, out of the plurality of UEs 100 receiving the same multicast data (MBMS service), the eNB 200 may set a multicast group including the UE 100 having a similar received quality of the MBSFN transmission (that is, expected MCS). Alternatively, the eNB 200 may set a multicast group including mutually adjacent UEs 100.

### (Operation pattern 2)

Fig. 10 is a sequence diagram illustrating an operation pattern 2 of the first embodiment.

As illustrated in Fig. 10, in step S201, the MCE 11 transmits an MBMS counting request (MBMS Counting Request), to the eNB 200. Also, in step S202, the eNB 200 transmits the MBMS counting request (MBMS Counting Request) to the UE 100, in accordance with the request from the MCE 11. The "MBMS Counting Request" includes a TMGI list that is a list of the TMGI (MBMS service) to be counted.

In step S203, the UE 100 transmits an MBMS counting response (MBMS Counting Response) to the eNB 200, in response to reception of the "MBMS Counting Request".

The "MBMS Counting Response" includes information indicating whether or not the UE 100 has an interest in each TMGI in the TMGI list. The "MBMS Counting Response" includes information indicating the geographical location of the UE 100 (location information) and/or information related to the neighboring cell detected by the UE 100 (neighboring cell information).

In step S204, the eNB 200 transfers the "MBMS Counting Response" received from the UE 100, to the MCE 11. At that time, the cell ID of the eNB 200 may be included.

In step S205, the MCE 11 determines whether or not to start the SC-PTM transmission on the basis of the information included in the "MBMS Counting Response". For example, in a case where the plurality of UEs 100 having an interest in the same TMGI (MBMS service) is adjacent to each other, the MCE 11 may determine to start the SC-PTM transmission for the plurality of UEs 100. Alternatively, in a case where the plurality of UEs 100 having an interest in the same TMGI (MBMS service) is located near the cell edge of the cell of the eNB 200, to avoid interference with the neighboring cell, the MCE 11 may determine to set the MBSFN area including the cell and the neighboring cell and start the MBSFN transmission.

The MCE 11, when determining to start the SC-PTM transmission, may transmit a start instruction of the SC-PTM transmission to the eNB 200 (step S206).

### (Operation pattern 3)

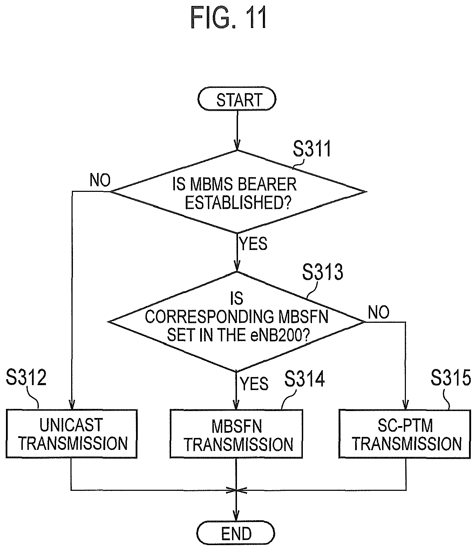

Fig. 11 is a flowchart illustrating an operation pattern 3 of the first embodiment.

As illustrated in Fig. 11, in a case where an MBMS bearer (IP multicast bearer) to an MBMS GW 21 is not established (step S311: NO), the eNB 200 determines to perform the unicast transmission (step S312).

In a case where the MBMS bearer to the MBMS GW 21 is established (step S311: YES) and an MBSFN (MBSFN area) corresponding to the MBMS bearer is set in the cell of the eNB 200 (step S313: YES), the eNB 200 determines to transmit the data received via the MBMS bearer, over the MBSFN transmission.

In a case where the MBMS bearer to the MBMS GW 21 is established (step S311: YES) and the MBSFN (MBSFN area) corresponding to the MBMS bearer is not set in the cell of the eNB 200 (step S313: NO), the eNB 200 determines to transmit the data received via the MBMS bearer, over the SC-PTM transmission. Incidentally, the eNB200 may determine to perform the unicast transmission by establishing an EPS bearer.

### (Operation pattern 4)

The eNB 200 autonomously determines to stop the SC-PTM transmission even when performing the SC-PTM transmission in accordance with an instruction from another network apparatus (for example, the MCE 11).

For example, in the operation pattern 1 described above, the eNB 200 may determine to stop the SC-PTM transmission on the basis of the "Measurement Report" from the UE 100, even when performing the SC-PTM transmission in accordance with the instruction from the other network apparatus (for example, the MCE 11). Alternatively, the eNB 200 may determine to stop the SC-PTM transmission on the basis of a Channel Quality Indicator (CQI) or an HARQ ACK/NACK from the UE 100.

The eNB 200, when determining to stop the SC-PTM transmission for the multicast group including a plurality of UEs 100, may switch to the unicast transmission for each of the plurality of UEs 100. For example, in a case where there is a large variation in the received quality (that is, expected MCS) or location of the SC-PTM transmission in the plurality of UEs 100, the eNB 200 may stop the SC-PTM transmission and switch to the multicast transmission. Alternatively, in a case where available radio resources are increased in the cell of the eNB 200, the eNB 200 may stop the SC-PTM transmission and switch to the multicast transmission.

Incidentally, the eNB 200, when performing the SC-PTM transmission in accordance with the instruction from the other network apparatus (for example, the MCE 11), during determining to stop the SC-PTM transmission, may notify the other network apparatus of stopping the SC-PTM transmission.

### (Operation pattern 5)

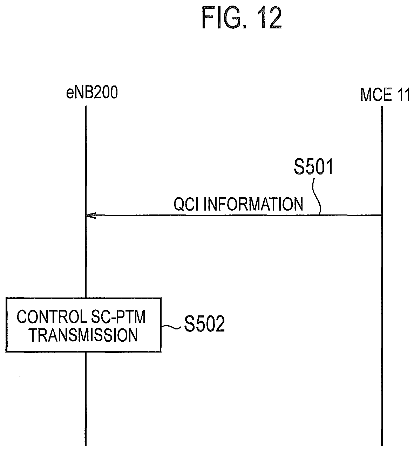

Fig. 12 is a sequence diagram illustrating an operation pattern 5 of the first embodiment.

As illustrated in Fig. 12, in step S501, in a case where the MBMS bearer (IP multicast bearer) to the MBMS GW 21 is established, the eNB 200 acquires QoS Class Identifier (QCI) information associated with the MBMS bearer, from the MCE 11. Prior to step S501, the eNB 200 may request the MCE 11 to transmit the QCI information.

In step S502, the eNB 200 performs scheduling in the SC-PTM transmission corresponding to the MBMS bearer on the basis of the QCI information. For example, the eNB 200 decides the MCS and/or the number of resource blocks applied to the SC-PTM transmission such that the required QoS is satisfied, on the basis of the QCI information.

### [Second Embodiment]

A second embodiment will be described mainly in differences from the first embodiment.

An eNB 200 according to the second embodiment provides a multicast service over SC-PTM transmission. The eNB 200 performs processing of transmitting data to a UE 100 including a first bearer for unicast transmission and a second bearer for the SC-PTM transmission. The eNB 200 (dynamically) performs switching between the unicast transmission and the SC-PTM transmission by routing the data received from a core network to any one of the first bearer and the second bearer.

### (Operation pattern 1)

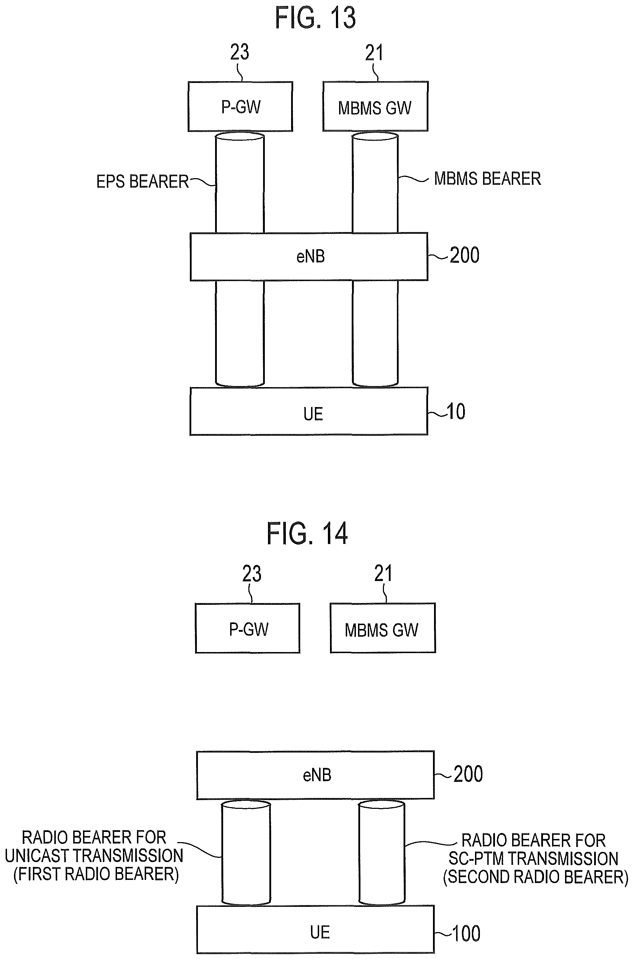

Fig. 13 is a diagram for describing an operation pattern 1 of the second embodiment.

As illustrated in Fig. 13, the first bearer for the unicast transmission is an EPS bearer established between the UE 100 and a P-GW 23 via the eNB 200. The second bearer for the SC-PTM transmission is an MBMS bearer established between the UE 100 and an MBMS GW 21 via the eNB 200.

For example, the eNB 200 performs switching from the unicast transmission to the SC-PTM transmission by routing data received from the P-GW 23 via the EPS bearer to the MBMS bearer. Alternatively, the eNB 200 performs switching from the SC-PTM transmission to the unicast transmission by routing data received from the MBMS GW 21 via the MBMS bearer to the EPS bearer.

The eNB 200 may dynamically perform switching between the unicast transmission and the SC-PTM transmission on the basis of feedback information (CQI, HARQ ACK/NACK, or the like) from the UE 100.

The eNB 200 may notify the UE 100 of setting information for setting both bearers of the first bearer for the unicast transmission (EPS bearer) and the second bearer for the SC-PTM transmission (MBMS bearer). In this case, the setting information may be notified by an RRC message, for example.

Alternatively, the eNB 200 may acquire, from the UE 100, information related to both bearers of the first bearer (EPS bearer) and the second bearer (MBMS bearer) established by the UE 100.

### (Operation pattern 2)

Fig. 14 is a diagram for describing an operation pattern 2 of the second embodiment.

As illustrated in Fig. 14, in the operation pattern 2, the first bearer for the unicast transmission is a first radio bearer established between the UE 100 and the eNB 200. The second bearer for the SC-PTM transmission is a second radio bearer established between the UE 100 and the eNB 200. Incidentally, as a third radio bearer, an MBMS PTM bearer (radio bearer for MBSFN transmission) may be established.

For example, the eNB 200 performs switching from the unicast transmission to the SC-PTM transmission by routing the data received from the P-GW 23 via the EPS bearer (see Fig. 13) to the second radio bearer. Alternatively, the eNB 200 performs switching from the SC-PTM transmission to the unicast transmission by routing the data received from the MBMS GW 21 via the MBMS bearer (see Fig. 13) to the first radio bearer.

In the operation pattern 2, the first radio bearer is associated with a Cell-Radio Network Temporary Identifier (C-RNTI). The second radio bearer is associated with a Group-Radio Network Temporary Identifier (G-RNTI). The UE 100 identifies the first radio bearer by the C-RNTI, and identifies the second radio bearer by the G-RNTI.

In the operation pattern 2, the first radio bearer and the second radio bearer may be associated with one logical channel ID (LCID). In the UE 100, data of the first radio bearer and data of the second radio bearer are mapped to the same logical channel. Incidentally, also in the operation pattern 1, a method may be adopted for associating the EPS bearer and the MBMS bearer with one LCID.

The eNB 200 may dynamically perform switching between the unicast transmission and the SC-PTM transmission on the basis of feedback information (CQI, HARQ ACK/NACK, or the like) from the UE 100.

The eNB 200 may notify the UE 100 of setting information for setting both bearers of the first bearer for the unicast transmission (EPS bearer) and the second bearer for the SC-PTM transmission (MBMS bearer). In this case, the setting information may be notified by an RRC message, for example.

Alternatively, the eNB 200 may acquire, from the UE 100, information related to both bearers of the first bearer (EPS bearer) and the second bearer (MBMS bearer) established by the UE 100.

### [Other Embodiments]

The first embodiment and the second embodiment described above may be carried out independently, or may be carried out in combination with each other.

In the embodiments described above, an LTE system has been exemplified as a mobile communication system, and LTE communication has been exemplified as WAN communication. However, the present invention is not limited to the LTE system. The present invention may be applied to a mobile communication system other than the LTE system.

### [Cross Reference]

The entire contents of U.S. provisional application No. 62/145908 (April 10, 2015) are incorporated herein by reference.

### INDUSTRIAL APPLICABILITY

The present invention is useful in the field of communication.

## Claims

1. A base station comprising
a controller configured to acquire a QoS Class Identifier (QCI) associated with a Multimedia Broadcast and Multicast Service (MBMS) bearer between an MBMS gateway and the base station, from a Multi-cell/multicast Coordination Entity (MCE), wherein
the controller is configured to provide a multicast service over Single Cell Point to Multi-point (SC-PTM) transmission on the basis of the QCI.

2. The base station according to claim 1, wherein
the controller is configured to perform scheduling in the SC-PTM transmission corresponding to the MBMS bearer on the basis of information on the QCI.

3. A Multi-cell/multicast Coordination Entity (MCE) used in a system including a base station that provides a multicast service over Single Cell Point to Multi-point (SC-PTM) transmission, the MCE comprising
a controller configured to transmit, to the base station, a QoS Class Identifier (QCI) associated with an MBMS bearer between the base station and a Multimedia Broadcast and Multicast Service (MBMS) gateway.

4. A network apparatus provided in a network that provides a multicast service over a Single Cell Point to Multi-point (SC-PTM) transmission, the network apparatus comprising
a controller configured to determine, on the basis of a setting status of information notified from a user terminal in a cell or a Multimedia Broadcast Multicast Service (MBMS) in the network, whether or not the SC-PTM transmission is performed in the cell.

5. The network apparatus according to claim 4, wherein,
the controller is configured to acquire, in a case where the SC-PTM transmission is started, a measurement report from the user terminal,
the measurement report includes information indicating whether or not a modulation and coding scheme applied to the SC-PTM transmission is sufficient, and
the controller is configured to determine whether or not to stop the SC-PTM transmission, on the basis of information included in the measurement report.

6. The network apparatus according to claim 5, wherein
the measurement report includes information indicating a geographical location of the user terminal or information related to a neighboring cell detected by the user terminal.

7. The network apparatus according to claim 4, wherein,
the controller is configured to
when determining to stop the SC-PTM transmission, switch from the SC-PTM transmission to Multicast Broadcast Single Frequency Network (MBSFN) transmission or unicast transmission.

8. The network apparatus according to claim 4, wherein,
the controller is configured to acquire, in a case where the SC-PTM transmission is not started, an MBMS counting response from the user terminal,
the MBMS counting response includes information indicating a geographical location of the user terminal or information related to a neighboring cell detected by the user terminal, and
the controller is configured to determine whether or not to start the SC-PTM transmission, on the basis of information included in the MBMS counting response.

9. The network apparatus according to claim 4, wherein
the network apparatus is a base station configured to manage the cell.

10. The network apparatus according to claim 9, wherein,
the controller is configured to
in a case where an MBMS bearer to an MBMS gateway is established and a MBSFN corresponding to the MBMS bearer is not set in the cell, determine to transmit data received via the MBMS bearer, over the SC-PTM transmission.

11. The network apparatus according to claim 9, wherein
the controller is configured to
even when performing the SC-PTM transmission in accordance with an instruction from another network apparatus, autonomously determine to stop the SC-PTM transmission.

12. The network apparatus according to claim 11, wherein
the controller is configured to
when determining to stop the SC-PTM transmission for a multicast group including a plurality of user terminals, switch to unicast transmission for each of the plurality of user terminals.

13. The network apparatus according to claim 9, wherein,
the controller is configured to
in a case where an MBMS bearer to an MBMS gateway is established, acquire QoS Class Identifier (QCI) information associated with the MBMS bearer, from a Multi-cell/multicast Coordination Entity (MCE).

14. The network apparatus according to claim 13, wherein
the controller is configured to perform scheduling in the SC-PTM transmission corresponding to the MBMS bearer, on the basis of the QCI information.

15. A user terminal to which a multicast service is provided from a network over Single Cell Point to Multi-point (SC-PTM) transmission, the user terminal comprising
a controller configured to transmit a measurement report to the network, in a case where the SC-PTM transmission is started, wherein
the measurement report includes information indicating whether or not a modulation and coding scheme applied to the SC-PTM transmission is sufficient.

16. The user terminal according to claim 15, wherein
the measurement report includes information indicating a geographical location of the user terminal or information related to a neighboring cell detected by the user terminal.

17. A user terminal to which a multicast service is provided from a network over Single Cell Point to Multi-point (SC-PTM) transmission, the user terminal comprising
a controller configured to transmit an MBMS counting response to the network, in response to a Multimedia Broadcast Multicast Service (MBMS) counting request from the network, wherein
the MBMS counting response includes information indicating a geographical location of the user terminal or information related to a neighboring cell detected by the user terminal.

18. A base station that provides a multicast service over Single Cell Point to Multi-point (SC-PTM) transmission, the base station comprising
a controller configured to transmit data to a user terminal having a first bearer for unicast transmission and a second bearer for SC-PTM transmission, wherein
the controller is configured to switch between the unicast transmission and the SC-PTM transmission by routing data received from a core network to any one of the first bearer and the second bearer.

19. The base station according to claim 18, wherein
the first bearer is an Evolved Packet System (EPS) bearer established between the user terminal and a PDN Gateway (P-GW) via the base station, and
the second bearer is an MBMS bearer established between the user terminal and an MBMS Gateway (MBMS GW) via the base station.

20. The base station according to claim 18, wherein
the first bearer is a first radio bearer established between the user terminal and the base station, and
the second bearer is a second radio bearer established between the user terminal and the base station.

21. The base station according to claim 20, wherein
the first bearer is associated with a Cell-Radio Network Temporary Identifier (C-RNTI), and
the second bearer is associated with a Group-Radio Network Temporary Identifier (G-RNTI).

22. The base station according to claim 18, wherein
the first bearer and the second bearer are associated with one logical channel ID.

23. The base station according to claim 18, wherein
the controller configured to switch between the unicast transmission and the SC-PTM transmission, on the basis of feedback information from the user terminal.

24. The base station according to claim 18, wherein
the controller is further configured to notify the user terminal of setting information for setting both bearers of the first bearer and the second bearer.

25. The base station according to claim 18, wherein
the controller is further configured to acquire information related to both bearers of the first bearer and the second bearer, from the user terminal.
